(19) Europäisches Patentamt
European Patent Office
Office européen des brevets

(11) EP 0 629 664 B1

(12) EUROPÄISCHE PATENTSCHRIFT

(45) Veröffentlichungstag und Bekanntmachung des Hinweises auf die Patenterteilung:
**29.12.1997 Patentblatt 1997/52**

(51) Int Cl.[6]: **C08L 75/04**

(21) Anmeldenummer: **94108932.8**

(22) Anmeldetag: **10.06.1994**

(54) **Wässrige Polyurethandispersionen**

Aqueous polyurethane dispersions

Dispersions aqueuses de polyuréthane

(84) Benannte Vertragsstaaten:
**BE DE ES FR GB IT NL SE**

(30) Priorität: **21.06.1993 DE 4320455**

(43) Veröffentlichungstag der Anmeldung:
**21.12.1994 Patentblatt 1994/51**

(73) Patentinhaber: **BASF Aktiengesellschaft**
**67063 Ludwigshafen (DE)**

(72) Erfinder:
- **Wallon, Alexander, Dr.**
**D-67117 Limburgerhof (DE)**
- **Auchter, Gerhard, Dr.**
**D-67098 Bad Duerkheim (DE)**
- **Licht, Ulrike, Dr.**
**D-68163 Mannheim (DE)**
- **Haeberle, Karl, Dr.**
**D-67346 Speyer (DE)**
- **Funhoff, Angelika, Dr.**
**D-69198 Schriesheim (DE)**

(56) Entgegenhaltungen:
**EP-A- 0 129 977**
**DE-A- 1 953 348**
**FR-A- 2 213 330**
**US-A- 3 427 192**

EP 0 629 664 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft wäßrige Polyurethandispersionen, enthaltend

A) wenigstens ein im wäßrigen Medium dispergiertes, bei einem pH-Wert des wäßrigen Dispergiermediums von ≥ 6 negativ geladene Gruppen aufweisendes, Polyurethan (Komponente A) als Hauptbestandteil und

B) bezogen auf die Komponente A wirksame Mengen wenigstens eines Polymerisats (Komponente B), das in polymerisierter Form aufgebaut ist aus

a) 25 bis 100 Gew.-% wenigstens eines ungesättigten Monomeren, das, im Sinne Brönsteds, wenigstens eine Säuregruppe aufweist (Monomere Ba) und

b) 0 bis 75 Gew.-% eines oder mehrerer radikalisch copolymerisierbarer Monomere (Monomere Bb),

mit der Maßgabe, daß

- die Komponente B ein relatives zahlenmittleres Molekulargewicht von 1 000 bis 50 000 aufweist,
- die Komponente B bei Zusatz zu Wasser bei 25°C wie eine Brönsted-Säure wirkt und
- das wäßrige Dispergiermedium enthaltend die Komponenten (A) und (B) bei 25°C einen pH-Wert ≥ 6 aufweist.

Vorzugsweise beträgt das relative zahlenmittlere Molekulargewicht $\overline{M}_n$ der Komponente B 2 000 bis 20 000 und ganz besonders bevorzugt 2 000 bis 10 000. Ferner sind Komponenten B von Vorteil, deren Verhältnis aus relativem gewichtsmittlerem Molekulargewicht $\overline{M}_w$ und $\overline{M}_n$, d.h. $\overline{M}_w/\overline{M}_n$, einen Wert von 1,5 bis 3,5 aufweist. Molekulargewichtsangaben bezüglich der Komponente B beziehen sich in dieser Schrift auf Bestimmungen mittels der Gelpermeationschromatographie.

Wäßrige Polyurethandispersionen sind allgemein bekannt. Sie werden z.B. als Lacke, Bindemittel oder aber auch als Klebstoffe angewendet. In der Regel werden sie unter Mitwirkung ionischer Ladungen in disperser Verteilung gehalten, d.h. das Polyurethan selbst trägt positive oder negative Ladungen und die Abstoßung der Ladungen gleichen Vorzeichens verhindert das Koagulieren der dispersen Verteilung. Selbstverständlich können neben diesen inneren Dispergiermitteln auch äußere Dispergiermittel wie Schutzkolloide und/oder Emulgatoren mitverwendet werden. Ihre Mitverwendung ist jedoch nicht unabdingbar (vgl. z.B. DE-A 39 03 538, DE-A 19 95 745 und DE-A 40 24 567) und nicht bevorzugt. Nachteilig an solchen unter Mitwirkung innerer Ladungen stabilisierten waßrigen Polyurethandispersionen ist jedoch, daß sie aufgrund der Wechselwirkung der Ladungen gleichen Vorzeichens eine erhöhte dynamische Viskosität, einen erhöhten Fließwiderstand aufweisen (vgl. z.B. die ältere Anmeldung DE-A 41 37 661 = O.Z. 0050/42811).

Aufgabe der vorliegenden Erfindung war daher, wäßrige Polyurethandispersionen zur Verfügung zu stellen, deren disperse Polyurethanverteilung zwar einerseits unter Mitwirkung von auf dem Polyurethan befindlichen negativen Ladungen stabilisiert wird, die andererseits jedoch bei im wesentlichen unveränderten anwendungstechnischen Eigenschaften einen verminderten Fließwiderstand, eine reduzierte dynamische Viskosität aufweisen.

Demgemäß wurden die eingangs definierten wäßrigen Polyurethandispersionen gefunden.

Die die dynamische Viskosität mindernde Wirkung der Komponente B ist überraschend, ist doch allgemein bekannt, daß Polymerisate, die einen erhöhten Anteil an saure Funktionen aufweisenden Monomeren einpolymerisiert enthalten, insbesondere in einen erhöhten pH-Wert aufweisendem wäßrigem Medium verdickend, d.h. den Fließwiderstand erhöhend, wirken (vgl. z.B. Ullmans Encyklopädie der technischen Chemie, 4. Auflage, Verlag Chemie (Weinheim), Bd. 19 (1980), S. 5 und Bd. 22 (1982), S. 586 und 587 sowie DE-A 24 01 163 und WO 88/08858). Offensichtlich ist eine wesentliche Voraussetzung für die erfindungsgemäße Wirkung der Komponente B deren begrenztes mittleres Molekulargewicht.

Bemerkenswerterweise reduziert die Anwesenheit der Komponente B nicht nur die dynamische Viskosität der wäßrigen Polyurethandispersion (unabhängig vom Schergefälle), sondern mindert gleichzeitig deren Neigung zu strukturviskosem Verhalten, d.h. die Neigung zu Newton'schem Verhalten, bei dem die dynamische Viskosität von der Schubspannung unabhängig ist, nimmt zu.

Die erfindungsgemäßen wäßrigen Polyurethandispersionen entfalten ihre erfindungsgemäß vorteilhaften Eigenschaften besonders augenfällig dann, wenn ihr Gehalt an dispergiertem Polyurethan, bezogen auf die Dispersion, 20 bis 80, vorzugsweise 40 bis 60 Gew.-% beträgt.

Ferner beträgt der pH-Wert ihres wäßrigen Dispergiermediums bei 25°C mit Vorteil 6 bis 11, vorzugsweise 7 bis 9.

In der Regel ist die Komponente A im wesentlichen aufgebaut aus

a) wenigstens einem organischen Diisocyanat oder wenigstens einem eine arithmetisch mittlere NCO-Funktionalität von 1,9 bis 2,3 aufweisenden Gemisch aus organischen Isocyanaten [Monomere Aa],

b) wenigstens einer wenigstens eine anionogene Gruppe aufweisenden Verbindung, die darüber hinaus wenigstens eine alkoholische OH-Gruppe oder thiolische SH-Gruppe oder

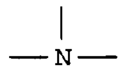 H -Gruppen

oder ein Gemisch dieser Gruppen aufweist [Monomere Ab],

c) wenigstens einem von den Monomeren Ab verschiedenen zweiwertigen Alkohol eines zahlenmittleren relativen Molekulargewichts von über 500 bis 5000 oder wenigstens einem eine arithmetisch mittlere Funktionalität an alkoholischen OH-Gruppen von 1,5 bis 2,5 aufweisenden Gemisch aus von den Monomeren Ab verschiedenen Alkoholen eines zahlenmittleren relativen Molekulargewichts von über 500 bis 5000 [Oligomere Ac] und

d) keiner, einer oder mehreren von den Monomeren Ab verschiedenen Verbindungen, die zwei funktionelle Gruppen aus der Menge umfassend die alkoholische OH-Gruppe, die thiolische SH-Gruppe und die

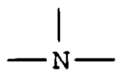 H -Gruppe

sowie ein zahlenmittleres relatives Molekulargewicht von 60 bis 500 aufweisen oder keinem oder einem eine arithmetisch mittlere Funktionalität an funktionellen Gruppen aus der Menge umfassend die alkoholische OH-Gruppe, die thiolische SH-Gruppe und die

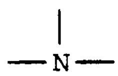 H -Gruppe

von 1,5 bis 2,5 aufweisenden Gemisch aus von den Monomeren Ab verschiedenen Verbindungen eines zahlenmittleren Molekulargewichts von 60 bis 500 [Monomere Ad].

Vorzugsweise ist die Komponente A ausschließlich aus den Monomeren Aa bis Ad aufgebaut. Als Monomere Aa eignen sich insbesondere aliphatische, cycloaliphatische, araliphatische und aromatische Diisocyanate wie Tetramethylendiisocyanat, Hexamethylendiisocyanat, Dodecamethylendiisocyanat, Trimethylhexamethylendiisocyanate wie 2,2,4- und 2,4,4-Trimethylhexamethylendiisocyanat, Cyclohexyldiisocyanate wie 1,4-Diisocyanatocyclohexan, Methylcyclohexyldiisocyanate, l-Isocyanato-3,3,5-trimethyl-5-isocyanatomethylcyclohexan (Isophorondiisocyanat), 4,4'-Diisocyanatodiphenylmethan, 2,4- und 2,6-Diisocyanatotoluol, 4,4'-Di-(isocyanatocylohexyl)-methan, Tetramethylxylylendiisocyanat, 1,4-Diisocyanatobenzol, p-Xylylendiisocyanat, Isopropenyldimethyltolylendiisocyanat, Tetramethylxylylendiisocyanat sowie davon abgeleitete Carbodiimid-, Allophanat-, Isocyanurat-, Urethan- oder Biuretgruppen aufweisende Polyisocyanate. Ferner eignen sich als Monomere Aa Monoisocyanate wie Phenylisocyanat, Cyclohexylisocyanat oder n-Dodecylisocyanat. Die Monoisocyanate werden normalerweise lediglich in untergeordneten Mengen zur Molekulargewichtsreglung mitverwendet. Vorzugsweise werden als Monomere Aa Verbindungen der allgemeinen Formel $X(NCO)_2$ eingesetzt, wobei X für einen aliphatischen Kohlenwasserstoffrest mit 4 bis 12 C-Atomen, einen cycloaliphatischen mit 6 bis 15 Atomen oder einem aromatischen Kohlenwasserstoffrest mit 6 bis 15 C-Atomen steht. Selbstverständlich können auch Gemische von Monomeren Aa eingesetzt werden. Insbesondere haben sich Gemische von aliphatischen bzw. cycloaliphatischen Diisocyanaten mit aromatischen Diisocyanaten im Molverhältnis von 1:4 bis 5:1 als geeignet erwiesen.

Werden als Monomere Aa Monoisocyanate mitverwendet, wird deren Anteil vorzugsweise so bemessen, daß sie zur Gesamtmenge der Isocyanatgruppen innerhalb der insgesamt eingesetzten Monomeren Aa höchstens 10 Mol-% an Isocyanatgruppen beitragen. In vorteilhafter Weise weisen die Monomeren Aa eine mittlere NCO-Funktionalität von 2 auf. Besonders vorteilhaft sind Monomerengemische Aa, die ausschließlich aus Diisocyanaten zusammengesetzt sind.

Als anionogene Gruppen der Monomeren Ab werden solche Gruppen betrachtet, die aus sich oder nach geeigneter Abwandlung, z.B. durch Neutralisation, in wäßrigem Medium teilweise oder vollständig ionisiert vorliegen, wobei die negative Ladung auf dem Rest des Monomeren Ab verbleibt, der die mit den Isocyanatgruppen reaktionsfähige wenigstens eine alkoholische OH-Gruppe, thiolische SH-Gruppe und/oder

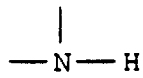 -Gruppe

trägt.

Alkoholische -OH- sowie thiolische -SH-Gruppen sollen vom Begriff der anionogenen Gruppen ausgenommen sein. Beispiele für anionogene Gruppen sind Säurefunktionen wie Carboxyl-, Sulfonsäureoder Phosphonsäuregruppen, die zusätzlich durch Neutralisation mit Basen abgewandelt werden können. Zur Abwandlung anionogener Gruppen durch Neutralisation eignen sich anorganische oder organische Basen wie Alkalimetallhydroxide, Alkalimetallcarbonate, Alkalimetallhydrogencarbonate, Ammoniak oder primäre, sekundäre sowie bevorzugt tertiäre Amine, z.B. Triethylamin, Dimethylaminoethanol oder Dimethylaminopropanol.

Besonders geeignete Monomere Ab sind z.B. aliphatische, cycloaliphatische oder aromatische Mono- oder Dihydroxycarbonsäuren. Bevorzugt sind Dihydroxyalkylcarbonsäuren, vor allem mit 3 bis 10 C-Atomen, wie sie auch in der US-A 3 412 054 beschrieben sind. Insbesondere bevorzugt sind Verbindungen der allgemeinen Formel

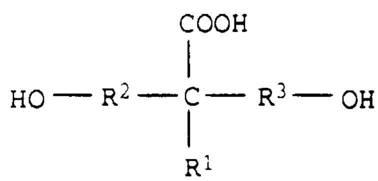 ,

in welcher $R^1$ für ein Wasserstoffatom oder einen Alkylrest mit 1 bis 4 Kohlenstoffatomen und $R^2$ sowie $R^3$ für eine $C_1$-$C_4$-Alkylengruppe stehen. Beispielsweise genannt sei 2,2-Dimethylolpropionsäure. Erwähnenswert sind weiterhin Diaminosulfonsäuren wie die N-(2-Aminoethyl)-2-aminoethansulfonsäure, Dihydroxyphosphonsäuren wie der 2,3-Dihydroxypropanphosphonsäureethylester oder die entsprechende nicht veresterte Phosphonsäure, Dihydroxysulfonsäuren, Diaminocarbonsäuren wie Lysin oder β-Alanin sowie die N-(2-Aminoethyl)-2-aminoethancarbonsäure und die in der DE-A 20 34 479 genannten Addukte von aliphatischen diprimären Diaminen an α,β-monoethylenisch ungesättigte Carbonsäuren oder deren Salze, z.B. das Addukt von Ethylendiamin an das Natriummetallsalz der Acrylsäure.

Die Neutralisation der anionogenen Gruppen kann vor, während, jedoch vorzugsweise nach der Isocyanat-Polyadditionsreaktion erfolgen.

Normalerweise beträgt die arithmetisch mittlere Funktionalität an mit Isocyanat reaktionsfähigen funktionellen Gruppen der Monomeren Ab 1,5 bis 2,5.

In der Regel beträgt das

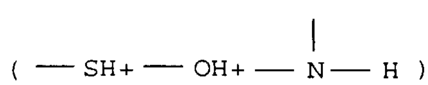

/ NCO-Äquivalentverhältnis für die eingebauten Monomeren Ab/Monomeren Aa 0,03 bis 0,5, vorzugsweise 0,05 bis 0,4. Eine gute dispergierende Wirkung ist dann gegeben, wenn in der erfindungsgemäßen wäßrigen Polyurethandispersion pro Gramm Polyurethan A 0,05 bis 2 mMol, vorzugsweise 0,1 bis 0,5 mMol der anionogenen Gruppen der eingebauten Monomeren Ab ionisiert vorliegen.

Bei den Oligomeren A handelt es sich um einen von den Monomeren Ab verschiedenen zweiwertigen Alkohol eines zahlenmittleren relativen Molekulargewichts von über 500 bis 5000 oder wenigstens ein eine arithmetisch mittlere Funktionalität an alkoholischen OH-Gruppen von 1,5 bis 2,5 aufweisendes Gemisch aus von den Monomeren Ab verschiedenen Alkoholen eines zahlenmittleren relativen Molekulargewichts von über 500 bis 5000 [Oligomere Ac].

Geeignete Oligomere Ac sind insbesondere die bekannten Polyester, Polyether, Polythioether, Polyacetone, Polyacetale, Polycarbonate und Polyesteramide mit wenigstens 2 Hydroxylgruppen. Bevorzugt sind Oligomere Ac, deren

relatives Molekulargewicht zwischen 750 und 3000 liegt. Ferner sind Diole als Monomere Ac bevorzugt.

Als Polyesterpolyole kommen vor allem die an sich bekannten Umsetzungsprodukte von mehrwertigen Alkoholen mit mehrbasischen Carbonsäuren in Betracht, wobei die alkoholische Komponente im Überschuß eingesetzt wird. Die mehrbasischen Carbonsäuren können aliphatischer, cycloaliphatischer, aromatischer, heterocyclischer oder ethylenisch ungesättigter Natur sein sowie gegebenenfalls Halogenatome als Substituenten tragen.

Anstelle der mehrbasischen Carbonsäuren können auch deren Anhydride verestert werden. Als Beispiele für geeignete mehrbasische Ausgangscarbonsäuren seien genannt: Bernsteinsäure, Adipinsäure, Sebacinsäure, Phthalsäure, Isophthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid oder Furmarsäure. Als im Überschuß einzusetzende mehrwertige Alkohole seien genannt: Ethandiol-(1,2), Propandiol-(1,2), Propandiol-(1,3), Butandiol-(1,2), Butandiol-(1,3), Butandiol-(1,4), Butendiol-(1,4), Butindiol-(1,4), Pentandiol-(1,5) und seine Stellungsisomeren, Hexandiol-(1,6), Octandiol-(1,8), 1,4-Bishydroxymethylcyclohexan, 2,2-Bis-(4-hydroxycyclohexyl)propan, 2-Methyl-1,3-propandiol, Glycerin, Trimethylolpropan, Trimethylolethan, Hexantriol-(1,2,6), Butantriol- (1,2,4), Diethylenglykol, Triethylenglykol, Tetraethylenglykol, Polyethylenglykol, Dipropylenglykol, Polypropylenglykol, Dibutylenglykol oder Polybutylenglykol. Bevorzugt sind Polyesterpolyole aus Diolen und Dicarbonsäuren.

Ferner eignen sich als Polyesterpolyole die Anlagerungsprodukte von Lactonen bzw. Lactongemischen an als Startermoleküle eingesetzte zweiwertige Akohole. Beispiele für bevorzugte Lactone sind ε-Caprolacton, β-Propiolacton, γ-Butyrolacton oder Methyl-ε-Caprolacton. Geeignete Startermoleküle sind insbesondere die bereits als Aufbaukomponente für die Polyesterpolyole genannten niedermolekularen zweiwertigen Alkohole.

Auch niedermolekulare Polyester- oder Polyetherdiole können als Starter zur Herstellung der Lacton-Anlagerungsprodukte eingesetzt werden. Selbstverständlich eignen sich auch Polyester aus Hydroxycarbonsäuren als Oligomere Ac. Ferner sind auch Polycarbonate, wie sie z.B. aus Phosgen oder Diphenylcarbonat und den als Aufbaukomponenten für die Polyesterpolyole genannten niedermolekularen zweiwertigen Alkoholen im Überschuß erhältlich sind, als Polyester geeignete Oligomere Ac. Als als Polyetherpolyole geeignete Monomere Ac kommen vorzugsweise Polyetherdiole in Betracht, wie sie z.B. durch Bortrifluorid katalysierte Verknüpfung von Ethylenoxid, Propylenoxid, Butylenoxid, Tetrahydrofuran, Styroloxid oder Epichlorhydrin mit sich selbst oder untereinander, oder durch Anlagerung dieser Verbindungen, einzeln oder im Gemisch, an Starterkomponenten mit reaktionsfähigen Wasserstoffatomen wie Wasser, mehrwertige Alkohole oder Amine wie Ethandiol-(1,2), Propandiol-(1,3), 1,2- oder 2,2-Bis-(4-hydroxyphenyl)propan oder Anilin erhältlich sind, in Betracht. Weiterhin sind Polyether-1,3-Diole, z.B. das an einer OH-Gruppe alkoxylierte Trimethylolpropan, dessen Alkylenoxidkette mit einem 1 bis 18 C-Atome enthaltenden Alkylrest abgeschlossen ist, vorzugsweise eingesetzte Monomere Ac. Einwertige Alkohole werden als Oligomere Ac vorzugsweise lediglich in untergordneten Mengen mitverwendet. Prinzipiell kommen die gleichen Verbindungstypen in Betracht, die im Rahmen der mehrwertigen Alkohole genannt worden sind.

Als Monomere Ad kommen unter anderen die als Aufbaukomponenten für die Polyesterpolyole Ac genannten niedermolekularen Polyole sowie mehrwertige Alkohole wie Pentaerythrit oder Sorbit in Betracht. Bevorzugt sind lineare 1,ω-Dihydroxyalkene wie Propandiol-(1,3), Butandiol-(1,4) und Hexandiol-(1,6). Ebenso wie bei den Monomeren Ac sind auch hier Diole bevorzugt. Weiter eignen sich als Monomere Ad Polyamine (vorzugsweise Diamine) wie 1,2-Diaminoethan, 1,6-Diaminohexan, Piperazin, 2,5-Dimethylpiperazin, l-Amino-3-aminomethyl-3,5,5-trimethylcyclohexan (Isophororndiamin), 4,4'-Di(aminocyclohexyl)-methan, 1,4-Diaminocyclohexan, 1,2- und 1,3-Diaminopropan, Hydrazin, Hydrazinhydrat, Triamine wie Diethylentriamin oder Tetramine wie N,N'-Bis-(3-aminopropyl)-1,4-diaminobutan. Als Monomere Ad kommen aber auch Ketimine, wie sie in der DE-B 27 25 589 beschrieben sind, Ketazine wie diejenigen der DE-B 28 11 148 und der US-A 4 269 748, Aminsalze wie diejenigen in der US-A 4 292 226 oder Oxazolidine, wie sie in der DE-B 27 32 131 und der US-A 4 192 937 beschrieben werden, in Betracht. Hierbei handelt es sich um maskierte Polyamine, aus denen in Gegenwart von Wasser intermediär die entsprechenden Polyamine freigesetzt werden. Weiterhin eignen sich als Monomere Ad Aminoalkohole wie Ethanolamin, Isopropanolamin, Methylethanolamin sowie Aminoethoxyethanol.

Weitere Beispiele von für den Aufbau der Polyurethane A geeigneten Monomeren bzw. Oligomeren Aa bis Ad sind z.B. in High Polymers, Vol. XVI, "Polyurethanes, Chemistry and Technology", Interscience Publishers, New York, Bd. I, 1962, S. 32 bis 42, S. 44 bis 54, und Bd. II, 1964, S. 5 bis 6 und S. 198 bis 199 beschrieben. Kettenverlängerung mit $H_2O$ ist ebenfalls möglich.

In vorteilhafter Weise werden die Mengen der Monomeren bzw. Oligomeren Ac und Ad so bemessen, daß das molare Verhältnis ihrer mit Isocyanat reaktionsfähigen alkoholischen Gruppen, thiolischen SH-Gruppen und oder

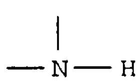 -Gruppen

(Ad:Ac) 0 bis 10, bevorzugt 1 bis 5 beträgt.

Insgesamt wird der Anteil der Monomeren Ab bis Ad vorzugsweise so gewählt, daß die Summe der gegenüber Isocyanat reaktionsfähigen alkoholischen -OH-Gruppen, thiolischen -SH-Gruppen und/oder

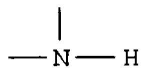 -Gruppen

(unter denen die alkoholischen -OH-Gruppen und

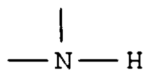 -Gruppen

bevorzugt sind) 0,9 bis 1,3, besonders bevorzugt 0,95 bis 1,1, bezogen auf eine Isocyanatgruppe, beträgt. Ganz besonders bevorzugt entsprechen die gegenüber Isocyanat reaktiven funktionellen Gruppen in ihrer Anzahl den Isocyanatgruppen.

In der Regel weisen die in den erfindungsgemäßen wäßrigen Polyurethandispersionen enthaltenen Polyurethane, von in DMF unlöslichen Vertretern abgesehen, in N,N-Dimethylformamid (DMF) einen K-Wert von 20 bis 80 auf. Der K-Wert is eine relative Viskositätszahl, die in Analogie zur DIN 53 726 bei 25°C bestimmt wird. Er enthält die Fließgeschwindigkeit einer 1 gew.-%igen Lösung des Polyurethans in DMF, relativ zur Fließgeschwindigkeit von reinem DMF und charakterisiert das mittlere Molekulargewicht des Polyurethans.

An dieser Stelle sei nochmals erwähnt, daß zur dispersen Verteilung des Polyurethans A äußere Dispergiermittel wie z.B. nichtionische Emulgatoren wie Polyetheralkohole des relativen Molekulargewichtsbereiches von 500 bis 10 000, vorzugsweise 1 000 bis 5 000, mitverwendet werden können. Ihre Mitverwendung ist jedoch aufgrund der inneren negativen Ladungen des Polyurethans nicht unabdingbar.

Zur Herstellung des Polyurethans A können die Monomeren bzw. Oligomeren Aa bis Ad in einem niedrig siedenden, mit Wasser mischbaren Lösungsmittel oder lösungsmittelfrei in bekannter Weise umgesetzt werden, wie es auch in der DE-A 34 37 918 beschrieben ist.

Als Lösungsmittel können alle gegenüber Isocyanaten unreaktiven Lösungsmittel eingesetzt werden. Besonders bevorzugt sind hierbei solche, die mit Wasser in beliebigen Mengen mischbar sind, wie z.B. Tetrahydrofuran, Methylethylketon, N-Methylpyrrolidon und insbesondere Aceton. Weniger bevorzugt sind hochsiedende mit Wasser mischbare Lösungsmittel, wie z.B. N-Methylpyrrolidon oder Dimethylformamid. In untergeordneten Mengen können in Lösungsmittelgemischen auch nicht mit Wasser mischbare Lösungsmittel wie Toluol oder Xylol enthalten sein. Vorzugsweise liegt der Siedepunkt des Lösungsmittels unter 100°C.

Die Reaktionstemperatur liegt bei 20 bis 160, vorzugsweise bei 50 bis 120°C. In der Regel beträgt die Reaktionsdauer 2 bis 10 h.

Durch die Mitverwendung von in an sich bekannter Weise katalytisch wirksamen Substanzen wie Dibutylzinndilaurat, Zinn-(II)-octoat oder 1,4-Diazobicyclo-(2,2,2)-octan, normalerweise in Mengen von 10 bis 1000 ppm, bezogen auf die Reaktionsmischung, kann die Umsetzung beschleunigt werden.

Anschließend wird gegebenenfalls mit einem mit Wasser mischbaren Lösungsmittel verdünnt, anionogene Gruppen der Monomeren Ab durch Neutralisation gegebenenfalls ionisiert, sowie Wasser zugegeben.

Danach werden üblicherweise die gegebenenfalls mitverwendeten organischen Lösungsmittel im gewünschten Ausmaß, im allgemeinen vollständig, destillativ abgetrennt, weshalb solche Lösungsmittel bevorzugt sind, deren Siedepunkt unterhalb des Siedepunktes von Wasser liegt.

Die zugegebene Wassermenge wird üblicherweise so bemessen, daß der gewünschte Feststoffgehalt der wäßrigen Polyurethandispersion resultiert.

Die Herstellung des Polyurethans A kann aber auch in der Weise erfolgen, daß in einem organischen Lösungsmittel zunächst ein Polyurethanprepolymer hergestellt wird. In der Regel werden dazu die Monomeren Aa, Ab und Ac sowie wenigstens ein Teil der Monomeren Ad miteinander umgesetzt. Anschließend wird die Reaktionsmischung, welche das noch Isocyanatgruppen aufweisende Polyurethanprepolymer enthält, unter Zusatz von Wasser dispers verteilt. Danach kann die weitere Umsetzung, insbesondere mit den verbliebenen Monomeren Ad, erfolgen. Anschließend wird, wie bereits beschrieben, das organische Lösungsmittel entfernt.

Aus den wie eben gezeigt erhältlichen, lediglich die Komponente A enthaltenden, waßrigen Polyurethandispersionen, sind die erfindungsgemäßen wäßrigen Polyurethandispersionen z.B. dadurch erhältlich, daß man ihnen wirksame Mengen wenigstens eines Polymerisats B, gegebenenfalls bei erhöhter Temperatur, zusetzt und den erforderlichen pH-Wert einstellt. Vorzugsweise wird man zur pH-Stellung Alkalimetallhydroxide, Ammoniak und/oder organische Amine verwenden. Erfindungsgemäße wäßrige Polyurethandispersionen, die keine mehrwertigen Metallionen enthalten, sind bevorzugt.

Als Monomere Ba eignen sich insbesondere ungesättigte Carbon-, Sulfon- und Phosphonsäuren. Besonders bevorzugte Monomere Ba sind Vinylsulfonsäure, Vinylphosphonsäure sowie 3 bis 6 C-Atome aufweisende $\alpha,\beta$-monoethylenisch ungesättigte Carbonsäuren. Unter letzteren sind die Acrylsäure und die Methacrylsäure von besonderem Vorteil. Selbstverständlich können die Monomeren Ba auch zunächst in Form ihrer Anhydride einpolymerisiert und im weiteren Verlauf teilweise oder vollständig hydrolisiert werden. Ein bevorzugtes Anhydrid ist z.B. Maleinsäureanhydrid.

Geeignete Monomere Bb sind insbesondere monoethylenisch ungesättigte Monomere wie Ester aus 3 bis 6 C-Atome aufweisenden $\alpha,\beta$-monoethylenisch ungesättigten Carbonsäuren und $C_1$- bis $C_{12}$-Alkanolen, vinylaromatische Monomere, Amide von 3 bis 6 C-Atome aufweisenden $\alpha,\beta$-monoethylenisch ungesättigten Carbonsäuren sowie die Nitrile dieser Säuren. Ferner eignen sich als Monomere Bb Ester aus Vinylalkohol und $C_1$- bis $C_{12}$-Alkancarbonsäuren. Außerdem kommen ungesättigte Kohlenwasserstoffe wie Butadien, Propen oder Ethen in Betracht. Besonders bevorzugt sind die Ester der Acryl- und Methacrylsäure wie n-Butylacrylat, Methylmethacrylat, Ethylacrylat, 2-Ethylhexylacrylat und tert.-Butylacrylat. Beispielhaft seien ferner genannt Acryl- und Methacrylamid, Acryl- und Methacrylnitril, Styrol und Vinyltoluol, Vinylacetat, Vinylpropionat sowie Vinyllaurat.

Vorzugsweise enthält die Komponente B 50 bis 100 Gew.-% an Monomeren Ba einpolymerisiert. Besonders bevorzugt beträgt der Anteil der Monomeren Ba 75 bis 100 Gew.-% und ganz besonders bevorzugt besteht die Komponente B ausschließlich aus Monomeren Ba in einpolymerisierter Form. Von Vorteil sind Polymerisate B, die in polymerisierter Form enthalten

a) 50 bis 100 Gew.-% Acrylsäure, Methacrylsäure und/oder Maleinsäureanhydrid und

b) 0 bis 50 Gew.-% Styrol.

Mit Vorteil liegt die Komponente B in den erfindungsgemäßen wäßrigen Polyurethandispersionen bei 25°C gelöst vor. D.h. der Aufbau von B umfaßt vorzugsweise keine vernetzend wirkenden Komponenten, da vernetzte Polymerisate B in wäßrigem Medium keine wirklichen Lösungen zu bilden vermögen.

Bevorzugt sind ferner Polymerisate B, deren Zusatz zu Wasser in einer Menge von 100 g/kg Wasser bei 25°C den pH-Wert des wäßrigen Mediums auf einen Wert unterhalb von 6 senkt.

Ferner beträgt die Löslichkeit der Komponente B in vorteilhafter Weise bei 25°C in Wasser wenigstens für den Fall wenigstens 100 g/kg Wasser, daß der pH-Wert der Mischung durch Zusatz von Natriumhydroxid auf einen pH-Wert $\geq 6$ erhöht wird. Vorzugsweise beträgt die Löslichkeit für diesen Fall wenigstens 200 g/kg Wasser und besonders bevorzugt wenigstens 300 g/kg Wasser. Eine wesentliche Eigenschaft einer solchen Lösung ist, daß ihre Lichtdurchlässigkeit unverdünnt bei einer Schichtdicke von 2,5 cm bei Raumtemperatur relativ zu Wasser, im wesentlichen 100 % beträgt.

Die den Fließwiderstand mindernde Wirkung der Komponente B hängt sowohl vom Polyurethangehalt der wäßrigen Polyurethandispersion als auch von der zugesetzten Menge an B ab.

In der Regel wird man das Polymerisat B in einer Menge von 0,01 bis 5, vorzugsweise 0,1 bis 1 Gew.-%, bezogen auf die Masse des Polyurethans, der erfindungsgemäßen wäßrigen Polyurethandispersion zusetzen. Während die anwendungstechnischen Eigenschaften der wäßrigen Polyurethandispersion durch den Zusatz des Polymerisats B im wesentlichen nicht beeinträchtigt werden, wird die Fließfähigkeit deutlich erhöht. Dies gilt unabhängig vom Schergefälle. Gleichzeitig nähert sich das rheologische Verhalten der wäßrigen Polyurethandispersion dem einer Newton'schen Flüssigkeit. Die Polymerisate B sind in an sich bekannter Weise z.B. durch radikalische Polymerisation in wäßriger oder organischer Lösung (z.B. Xylol o. Isopropanol) bzw. in Substanz erhältlich. In organischer Lösung wird man insbesondere dann arbeiten, wenn Monomere Bb miteinpolymerisiert werden. Erfolgt die Polymerisation in organischer Lösung, gibt man letztere nach beendeter Polymerisation in Wasser und entfernt das organische Lösungsmittel destillativ, wodurch eine wäßrige Lösung des Polymerisats erhalten wird.

Die Polymerisationstemperatur beträgt üblicherweise 25 bis 150°C. Um das Molekulargewicht des Polymerisats B gezielt einstellen zu können, werden üblicherweise das Molekulargewicht regelnde Verbindungen wie Thiole, z.B. Mercaptoethanol, mitverwendet. Als Polymerisationsinitiatoren kommen alle diejenigen in Betracht, die im genannten Temperaturbereich radikalische Polymerisationsreaktionen auszulösen vermögen und entweder in Wasser oder dem gewählten organischen Lösungsmittel oder in den Monomeren löslich sind. Beispiele sind Azoverbindungen und Peroxide wie $H_2O_2$ oder Alkalimetallperoxidisulfate. Selbstverständlich sind Polymerisate B im Handel allgemein käuflich zu erwerben.

Die erfindungsgemäße fließverbessernde Wirkung tritt auch dann ein, wenn die erfindungsgemäßen wäßrigen Polyurethandispersionen als weiteren Bestandteil C wenigstens ein die Haftung verbesserndes Polymerisat enthalten. Der Gewichtsanteil dieser die Haftung verbessernden Mittel kann 5 bis 60 Gew.-%, vorzugsweise 5 bis 30 Gew.-%, bezogen auf das dispergierte Polyurethan, betragen. Derartige die Haftung verbessernde Zusätze wird man insbesondere dann mitverwenden, wenn die erfindungsgemäße wäßrige Polyurethandispersion als Klebstoff verwendet werden

soll. Als die Haftung verbessernde Zusätze können alle diejenigen eingesetzt werden, die in den älteren Anmeldungen DE-A 43 14 237 (O.Z. 0050/44008), DE-A 41 37 661 (O.Z. 0050/42811) und DE-A 43 14 236 (O.Z. 0050/44009) als solche aufgeführt sind. Das die Haftung verbessernde Polymerisat kann dem Polyurethan ebenso wie die Komponente B sowohl vor, während oder nach Beendigung der Polyadditionsreaktion zur Herstellung des Polyurethans erfolgen. Selbstverständlich können die Zusätze auch erst der wäßrigen Dispersion des Polyurethans zugesetzt werden. Sie können als solche aber als Lösungen zugegeben werden.

Unter der Vielfalt der als Haftungsverbesserer möglichen Polykondensate, radikalisch polymerisierten Polymerisate oder Polyaddukte, seien im folgenden einige bevorzugte Typen beispielhaft genannt.

Bevorzugt handelt es sich beim haftungsverbessernden Polymer um Kondensationsharze von Aldehyden und/ oder Ketonen mit Phenolen, insbesondere solche mit relativen Molgewichten (Gewichtsmittel $\overline{M}_w$) zwischen 500 und 2000 sowie Erweichungstemperaturen im Bereich zwischen 80 und 130°C. Besonders bevorzugt handelt es sich bei den Kondensationsharzen um Novolake, wie sie durch sauer katalysierte Umsetzung von Phenolen, insbesondere Phenol oder durch $C_1$ bis $C_{10}$-Alkylgruppen substituierte Phenole, mit aliphatischen Aldehyden und/oder Ketonen wie n-Butyraldehyd, iso-Butyraldehyd, n-Propionaldehyd, Aceton, Acetaldehyd und Formaldehyd erhältlich sind. Insbesondere werden bei der Umsetzung 1,05 bis 1,3 Mol Phenole pro Mol Aldehyd und/oder Keton eingesetzt.

Insbesondere eignen sich auch Epoxidharze, vorzugsweise Umsetzungsprodukte von Epoxiden wie Epichlorhydrin mit Bisphenol A; bevorzugt sind solche mit Molgewichten (Gewichtsmittel $\overline{M}_w$) zwischen 500 und 5000 und Erweichungstemperaturen im Bereich zwischen 80 und 130°C.

Ferner kommen als haftungsverbessernde Polymere auch Polyvinylacetat, Polyvinylchlorid, Polymethylmethacrylat, Polyamide, Polyether, Polyester, Polyetherdiole, Polyesterdiole, Polyurethane, insbesondere salzgruppenfreien Polyurethane, und Phenacrylat in Betracht.

Als Polyvinylacetate werden die Homopolymerisate des Vinylacetates bevorzugt. Einsetzbar sind auch seine Copolymerisate, die bis zu 10 Gew.-% Comonomere wie Vinyllaurat, Vinylstearat oder bevorzugt (Meth)acrylsäure-, Fumarsäure- oder Maleinsäureester mit $C_1$- bis $C_8$-Alkanolen wie Methanol, n-Butanol oder 2-Ethylhexanol enthalten. Die Polymerisate weisen üblicherweise einen K-Wert, gemessen bei 25°C in Cyclohexanon nach DIN 53 726, von 45 bis 60 auf. Unter Polyvinylchlorid werden im allgemeinen die Homopolymerisate des Vinylchlorids und seine Copolymerisate, die bis zu 10 Gew.-% an Comonomeren wie Ethylen oder Vinylacetat enthalten, verstanden. Ihr K-Wert (25°C, Cyclohexanon, DIN 53 726) sollte zwischen 45 und 55 liegen. Als Polymethacrylat setzt der Fachmann üblicherweise Homopolymerisate des Methylacrylats oder seine Copolymerisate mit bis zu 10 Gew.-%, bezogen auf das Copolymerisat, an Vinylacetat, Acrylsäureestern von $C_1$- bis $C_8$-Alkanolen oder Methacrylsäureestern mit $C_2$- bis $C_8$-Alkanolen ein. Ihr Schmelzindex MFI, bestimmt nach DIN 53 735 (230°C/3,8 kg) liegt im allgemeinen zwischen 0,1 und 3,0. Die Herstellung dieser Polymerisate erfolgt im allgemeinen durch radikalische Polymerisation der ethylenisch ungesättigten Monomeren zwischen 30 und 150°C in Substanz, Lösung oder Emulsion mit anschließender Trocknung. Solche Polymerisate sind allgemein bekannt, z.B. aus Houben-Weyl, Methoden der organischen Chemie, Band E20, 1987, Seiten 1115-1125, 1041-1062 und 1141-1174.

Geeignete Polyamide haben eine K-Wert von 65 bis 80, gemessen in $H_2SO_4$ bei 25°C nach DIN 53 727. Es handelt sich üblicherweise um Polymere, die sich von Lactamen mit 7 bis 13 Ringgliedern wie ε-Caprolactam, ε-Capryllactam oder ε-Laurinlactam ableiten, beispielsweise wie Polycaprolactam (PA6), sowie um Polyamide, die durch Umsetzen von Dicarbonsäuren mit Diaminen erhalten werden. Beispiele hierfür sind Polyhexamethylenadipinamid (PA66), Polyhexamethylensebacinamid (PA610) oder Polyhexamethylendodecanamid (PA612). Geeignete Dicarbonsäuren sind beispielsweise Alkandicarbonsäuren mit 4 bis 12, insbesondere 6 bis 10 Kohlenstoffatomen sowie Phthalsäure, Terephthalsäure und Isophthalsäure sowie beliebige Mischungen dieser Säuren. Als Diamine seien beispielsweise Alkandiamine mit 4 bis 12, insbesondere 4 bis 8 Kohlenstoffatomen, ferner m-Xylylendiamin, p-Xylylendiamin, deren hydrierte Derivate, Bis-(4-aminophenyl)methan, Bis-(4-aminocyclohexyl)methan oder Bis(4-aminophenyl)propan-2,2 oder deren Mischungen genannt. Aufgrund der guten Löslichkeit werden Copolymere bevorzugt, beispielsweise ein Copolyamid aus 30 bis 40 Gew.-% Adipinsäure, 15 bis 20 Gew.-% Hexamethylendiamin, 30 bis 35 Gew.-% und 15 bis 20 Gew.-% ε-Caprolactam bzw. ε-Aminocapronsäure. Die Herstellung dieser bekannten Polymeren ist allgemeines Fachwissen, s. beispielsweise Römpp, Chemielexikon, 8. Auflage, Seiten 2861, 3058 und 3267 oder EP-A-129 195 und EP-A-129 196.

Die Polyetherdiole sind an sich bekannt, beispielsweise aus Kunststoff-Handbuch Bd. 7 (1983) Seiten 42 bis 54. Genannt seien Polyethylenoxid, Polypropylenoxid oder Polytetrahydrofuran oder deren Copolymere mit zwei endständigen Hydroxylgruppen. Sie werden in bekannter Weise hergestellt durch im allgemeinen anionische Polyaddition, s. beispielsweise N.G. Gaylord, High Polymers, Bd. 13, New York 1963, Part I. Untergeordnete Bedeutung haben Polyetherole, die zur Reaktivitätserhöhung mit Ethylenoxid gepfropft sind. Die Polyetherdiole haben im allgemeinen ein Molekulargewicht von 300 bis 3000, was einem K-Wert in DMF bei 25° nach DIN 53 726 vom 25 bis 60 entspricht. Bevorzugte Molekulargewichte liegen zwischen 800 und 2200, entsprechend einem K-Wert von 20 bis 50.

Als Polyether verwendet man beispielsweise Polyethylenoxid, Polypropylenoxid oder Polytetrahydrofuran. Die Polyether weisen üblicherweise einen K-Wert in DMF bei 25°C nach DIN 53 726 von 20 bis 50 auf. Sie sind allgemein

bekannt z.B. aus Encyclopedia of Polymer Science and Technology, Band 6, 1967, Seite 103 und folgende, Band 9, 1968, Seite 668 und folgende und Band 13, 1970, Seite 670 und folgende.

Als Polyester werden monomerfreie ungesättigte Polyesterharze bevorzugt. Diese sind bekannte Kondensationsprodukte aus mehrwertigen, insbesondere zweiwertigen Carbonsäuren und deren veresterbaren Derivaten, insbesondere deren Anhydride, die mit mehrwertigen, insbesondere zweiwertigen Alkoholen esterartig verknüpft sind, und ggf. zusätzliche Reste einwertiger Carbonsäuren oder einwertiger Alkohole enthalten. Als Ausgangsstoff seien genannt: Maleinsäure, Fumarsäure, Phthalsäure, Isophthalsäure, Terephthalsäure, Maleinsäureanhydrid, Phthalsäureanhydrid, Isophthalsäureanhydrid, Ethylenglykol, Propylenglykol, Butandiol-1,4 oder Neopentylglykol. Untergeordnete Bedeutung im Sinne der Erfindung haben solche Harze, die durch Cokondensation von Bisphenol A, Epichlorhydrin-bisphenol A Kondensaten und Methacrylsäure hergestellt werden. Monomerfrei in diesem Zusammenhang bedeutet, daß diese sogenannten UP-Harze nicht in zur Vernetzung geeigneten Monomeren wie Styrol gelöst sind. Die Produkte haben üblicherweise eine Viskosität bei 150°C von 1000 bis 6000 mPa·s, insbesondere 2000 bis 4000 mPa·s.

Als Polyesterdiole sind Kondensationsprodukte, die zwei endständige OH-Gruppen aufweisen, aus Dicarbonsäuren wie Adipinsäure oder Isophthalsäure mit Diolen wie beispielsweise Butandiol-(1,4), Hexandiol-(1,6) oder Neopentylglykol, geeignet.

Der Molekulargewichtsbereich der einsetzbaren Polyesterdiole liegt im allgemeinen zwischen 300 und 5000. Bevorzugt wird ein Molekulargewicht zwischen 800 und 2500, entsprechend einem K-Wert in DMF bei 25°C nach DIN 53 276 von 30 bis 55. Diese Polymeren und ihre Herstellung sind allgemein bekannt aus Kunststoff-Handbuch Bd. 7 (1983) Seiten 54 bis 62 und DE 1 268 842.

Salzgruppenfreie Polyurethane sind bekannte Additionspolymere auf Basis von Polyether- oder Polyesterdiolen, Isocyanaten wie Hexamethylendiisocyanat, 2,4-Diisocyanatodiphenylmethan und eventuell bi- oder trifunktionellen Kettenverlängerern, die noch üblichen Verfahren (Kunststoff-Handbuch, Karl-Hanser-Verlag, Band 7, (1966) hergestellt werden. Bevorzugt werden niedermolekulare Kondensate (K-Wert in DMF bei 25°C nach DIN 53 726 zwischen 25 und 60) eingesetzt. Vernetzte Polyurethane haben untergeordnete Bedeutung.

Phenacrylate werden bevorzugt durch Addition von mit Acrylsäure oder Methacrylsäure veresterten Bisphenol A Glycidethern mit Terephthalsäure hergestellt. Ebenso können Phenacrylate auf Basis von epoxydierten Novolaken eingesetzt werden. Die K-Werte der Polymerisate liegen im allgemeinen zwischen 30 und 55 (in Cyclohexan bei 25°C nach DIN 53 726).

Die beschriebenen erfindungsgemäßen wäßrigen Polyurethandispersionen eignen sich insbesondere als Lacke, Massen zum Beschichten, Bindemittel oder Klebstoffe. Bemerkenswerterweise ändert der Zusatz der Komponente B den LD-Wert der wäßrigen Ausgangsdispersion des Polyurethans A (bestimmt bei einem Polyurethanfeststoffgehalt von 0,01 Gew.-% relativ zu Wasser, Schichtdicke 2,5 cm, Temp. 25°C) im wesentlichen nicht.

Beispiele

Die in den nachfolgenden Beispielen verwendeten Symbole haben die nachstehend wiedergegebenen Bedeutungen:

TDI = Toluylendiisocyanat
HDI = Hexamethylendiisocyanat
DBTL = Dibutylzinndilaurat
PUD = 40 gew.-%ige wäßrige Lösung des Na-Salzes des Michael-Addukts aus Acrylsäure und Ethylendiamin,
DMPA = Dimethylolpropionsäure
IPDI = Isophorondiisocyanat
DMEA = Dimethylethanolamin
DETA = Diethylentriamin
NPG = Neopentylglykol

Komponente B1: 45 gew.-%ige wäßrige Lösung des Na-Salzes einer Polyacrylsäure, deren $\overline{M}_n$ den Wert 2 750 und deren $\overline{M}_w$ den Wert 9 000 hat.

Komponente B2: Copolymerisat aus Styrol und Acrylsäure mit einer Säurezahl gemäß DIN 53 402 von 260 bis 280 und einem $\overline{M}_n$ von 3 000 sowie einem $\overline{M}_w$ von 6 500.

Komponente B3: Soromin® SM, eine 30 gew.-%ige wäßrige Lösung eines Copolymerisats aus Styrol und Maleinsäureanhydrid, deren pH-Wert durch Basenzusatz auf einen Wert von 8,7 eingestellt ist.

Die dynamischen Viskositäten $\eta$ der nachfolgenden Beispiele wurden, falls nichts anderes erwähnt ist, bei einer

Schergeschwindigkeit von $279s^{-1}$ mit einem Rotations-Rheometer mit konzentrischen Zylindern (Spindeldurchmesser: 38,7 mm, Becherdurchmesser: 42,0 mm) bei 25°C bestimmt.

1. Herstellung konventioneller wäßriger Polyurethandispersionen KPUD1 bis KPUD4

KPUD1: Ein Gemisch aus 596,6 Polypropylenoxiddiol (Hydroxylzahl gemäß DIN 53 240 = 56), 21,5 g DMPA und 31,0 g NPG wurde mit 150,9 g TDI in Gegenwart von 0,5 g DBTL bei 108°C während 4 h umgesetzt. Nach Verdünnen der Reaktionsmischung mit 978 g Aceton betrug der Gehalt an verbliebenen freien NCO-Gruppen, bezogen auf die verdünnte Reaktionsmischung, 0,4 Gew.-%. Anschließend wurde die Mischung bei 55°C mit einer Lösung von 4,5 g Natriumhydroxid in 20 g Wasser neutralisiert. Daraufhin wurden bei 500C 1200 g Wasser zugegeben und sodann das Aceton bei einem Druck von 100 mbar und einer Temperatur von 43°C abdestilliert.
Die resultierende wäßrige Polyurethandispersion KPUD1 wurde auf einen Feststoffgehalt von 40 Gew.-% eingestellt. Sie war bei 25°C wie folgt charakterisiert:

pH: 8,1
LD: 83,7 %
η: 872 mPa·s

KPUD2: Ein Gemisch aus 266,91 g eines entwässerten Polyesters aus Adipinsäure und Butandiol (Hydroxylzahl gemäß DIN 53 240 = 47,1), 0,38 g einer 10 gew.-%igen Lösung von DBTL in Toluol, 71,8 g Aceton und 13,71 g TDI wurde 1 h bei 65°C gehalten. Anschließend wurden 13,24 g HDI zugesetzt und nochmals 1 h bei 65°C gehalten. Nach Verdünnung mit 287 g Aceton betrug der Gehalt an verbliebenen freien NCO-Gruppen, bezogen auf das verdünnte Reaktionsgemisch, 0,63 Gew.-%. Anschließend wurde bei 51°C mit 15,36 g PUD kettenverlängert und sodann bei 500C 300 g Wasser zugegeben und das Aceton abdestilliert und die resultierende wäßrige Polyurethandispersion KPUD2 auf einen Feststoffgehalt von 50 Gew.-% eingestellt. Sie war bei 250C wie folgt charakterisiert:

pH: 8,3
LD: 72 %
η: 114 mPa·s

KPUD3: Eine Mischung aus 388 g eines entwässerten Polyesters aus einem Adipinsäure und Isophthalsäure im molaren Verhältnis 1:1 umfassenden Gemisch und Hexandiol-(1,6), 24,5 g DMPA, 54,1 g Butandiol-(1,4) und 254,8 g IPDI wurden in 130 g Methylethylketon bei 920C während 5 h umgesetzt. Nach Verdünnen des Reaktionsgemisches mit 500 g Aceton betrug der Gehalt an verbliebenen freien NCO-Gruppen, bezogen auf das verdünnte Reaktionsgemisch, 0,88 Gew.-%. Anschließend wurde mit 19,6 g DMEA neutralisiert und mit 1200 g Wasser dispergiert. Unmittelbar danach wurde mit 8,6 g DETA gelöst in 50 g Wasser umgesetzt und Lösungsmittel abdestilliert. Die resultierende wäßrige Polyurethandispersion KPUD3 wurde auf einen Feststoffgehalt von 34,6 Gew.-% eingestellt. Sie war bei 25°C wie folgt charakterisiert:

pH: 9,0
LD: 98 %
η: 400 mPa·s

KPUD4: Eine Mischung aus 401 g Polypropylenglykol (Hydroxylzahl gemäß DIN 53 249 = 54), 0,5 g DBTL, 21,4 g DMPA, 20,11 g Neopentylglykol und 117,4 g TDI wurden während 4 h bei 105°C umgesetzt und danach mit 684,4 g Aceton verdünnt. Der Gehalt an verbliebenen freien NCO-Gruppen betrug, bezogen auf die verdünnte Reaktionsmischung, 0,68 Gew.-%. Anschließend wurde die Mischung bei 55°C mit einer Lösung von 4,46 g Natriumhydroxid in 30 g Wasser neutralisiert und sodann mit einer Lösung von 240 g eines Phenol/Aldehydharzes in 240 g Aceton versetzt. Daraufhin wurden bei 50°C 1200 g Wasser zum Dispergieren zugesetzt und das Aceton destillativ entfernt sowie die resultierende wäßrige Polyurethandispersion KPUD4 auf einen Feststoffgehalt von 40 Gew.-% eingestellt. Sie war bei 25°C wie folgt charakterisiert:

pH: 7,7
LD: 60 %
η: 124 mPa·s

2. Erfindungsgemäße wäßrige Polyurethandispersionen DPUD1 bis EPUD7

EPUD1: Wie KPUD4, vor der destillativen Entfernung des Acetons wurde jedoch ein Gemisch aus 2,25 g Komponente B2, 0,6 g Kaliumhydroxid und 30 g Wasser zugesetzt.
Der Feststoffgehalt der resultierenden wäßrigen Polyurethandispersion EPUD1 wurde so eingestellt, daß die enthaltene Menge an Polyurethan und an Dispergierwasser den Werten von KPUD4 entsprach. Die Polyurethandispersion war bei 25°C wie folgt charakterisiert:

pH: 7,8
LD: 88 %
η: 34 mPa·s

EPUD2: Wie KPUD4, vor der destillativen Entfernung des Acetons wurde jedoch eine Lösung von 5 g Komponente B1 in 10 g Wasser zugesetzt.
Der Feststoffgehalt der resultierenden wäßrigen Polyurethandispersion EPUD2 wurde so eingestellt, daß die enthaltene Menge an Polyurethan und an Dispergierwasser den Werten von KPUD4 entsprach. Die Polyurethandispersion war bei 25°C wie folgt charakterisiert:

pH: 8,0
LD: 62 %
η: 41,7 mPa·s

EPUD3: Wie KPUD2, vor der destillativen Entfernung des Acetons wurde jedoch eine Lösung von 4 g Komponente B1 in 20 g Wasser zugesetzt. Der Feststoffgehalt der resultierenden wäßrigen Polyurethandispersion EPUD3 wurde so eingestellt, daß die enthaltene Menge an Polyurethan und an Dispergierwasser den Werten von KPUD2 entsprach. Die Polyurethandispersion war bei 25°C wie folgt charakterisiert:

pH: 8,3
LD: 69 %
η: 98,3 mPa·s

EPUD4: Wie KPUD1, vor der destillativen Entfernung des Acetons wurde jedoch eine Lösung von 5 g Komponente B1 in 20 g Wasser zugesetzt. Der Feststoffgehalt der resultierenden wäßrigen Polyurethandispersion EPUD4 wurde so eingestellt, daß die enthaltene Menge an Polyurethan und an Dispergierwasser den Werten von KPUD1 entsprach. Die Polyurethandispersion war bei 25°C wie folgt charakterisiert:

pH: 8,2
LD: 86 %
η: 74 mPa·s

EPUD5: Wie EPUD4, jedoch wurde eine Lösung von 10 g Komponente B1 in 20 g Wasser zugesetzt. Die Polyurethandispersion war bei 25°C wie folgt charakterisiert:

pH: 8,3
LD: 87 %
η: 45 mPa·s

EPUD6: Wie KPUD3, die resultierende Polyurethandispersion enthielt jedoch zusätzlich 0,23 Gew.-%, bezogen auf das Polyurethan, an Komponente B1 (fest). Bei 25°C war sie wie folgt charakterisiert:

pH: 9,0
LD: 98 %
η: 129 mPa·s

EPUD7: Wie KPUD1, vor der destillativen Entfernung des Acetons wurde jedoch eine Lösung von 7,5 g Komponente B3 in 15 g Wasser zugesetzt. Der Feststoffgehalt der resultierenden wäßrigen Polyurethandispersion EPUD7 wurde so eingestellt, daß die enthaltene Menge an Polyurethan und an Dispergierwasser den Werten von KPUD1 entsprach. Die Polyurethandispersion war bei 25°C wie folgt charakterisiert:

pH: 8,3
LD: 77 %
η: 128 mPa·s

3. Untersuchung des Fließwiderstandes bei variabler Schergeschwindigkeit

a) Ein Gemisch aus 32 kg Lupranol® 1000 (Polypropylenglykol eines zahlenmittleren relativen Molekulargewichts von 2000), 2,58 kg DMPA, 4,0 kg Aceton und 6,128 kg TDI wurden mit 24 ml DBTL bei 107°C unter leichtem Druck von 1,5 bar während 6 h umgesetzt. Nach Verdünnen mit 32 kg Aceton betrug der Gehalt an verbliebenen freien NCO-Gruppen, bezogen auf die verdünnte Reaktionsmischung, 0,04 Gew.-%. Anschließend wurde mit 0,8 kg Triethylamin neutralisiert und mit 48 kg Wasser dispergiert. Anschließend wurde bei reduziertem Druck das Aceton destillativ entfernt und die resultierende wäßrige Polyurethandispersion KPUD5 auf einen Feststoffgehalt von 43,8 Gew.-% eingestellt. Sie war bei 25°C wie folgt charakterisiert:

pH: 6,7
LD: 88 %

b) EPUD7 und EPUD8 entsprachen KPUD5, enthielten jedoch zusätzlich, bezogen auf das dispergierte Polyurethan, 0,4 bzw. 1,0 Gew.-% Komponente B1 (fest).

Die nachfolgende Tabelle I zeigt die bei 25°C bei verschiedenen Schergeschwindigkeiten bestimmten dynamischen Viskositäten von KPUD5, EPUD7 und EPUD8.

Tabelle I

| Schergeschwindigkeit ($s^{-1}$) | η KPUD5 | η EPUD7 | η EPUD8 [mPa·s] |
|---|---|---|---|
| 4,46 | 451,4 | -- | -- |
| 7,85 | 434,7 | -- | -- |
| 14,2 | --- | 75,7 | -- |
| 15,19 | 383,1 | -- | -- |
| 18,96 | --- | 67,1 | 55,6 |
| 19,99 | 357,5 | -- | -- |
| 24,9 | --- | 63,9 | 54,6 |
| 26,7 | 328,9 | -- | -- |
| 32,9 | --- | 62,1 | 55,1 |
| 35,2 | 302,7 | -- | -- |
| 47,4 | --- | 60,5 | 54,1 |
| 51,1 | 264,6 | -- | -- |
| 63,7 | --- | 59,6 | 53,4 |
| 68,6 | 236,5 | -- | -- |
| 83 | --- | 58,6 | 53,5 |
| 90,2 | 210,2 | -- | -- |
| 111,7 | --- | 57,5 | 52,9 |
| 120,4 | 185,2 | -- | -- |
| 147,4 | --- | 56,4 | 52,3 |
| 158,8 | 163,6 | -- | -- |
| 214 | --- | 54,4 | 51,2 |
| 287 | --- | 51,8 | 50,2 |

4. Anwendungstechnische Eigenschaften von konventionellen und erfindungsgemäßen wäßrigen Polyurethandispersionen (Kontaktverklebung nach Wärmeaktivierung)
Vor dem Auftrag wurden die wäßrigen Polyurethandispersionen mit 7,5 Gew.-%, bezogen auf das dispergierte Polyurethan, eines wasseremulgierbaren Polyisocyanats versetzt.

Schälfestigkeit:

Die Dispersionen wurden mit einem Pinsel (1 Zoll, feine Borsten) gleichmäßig auf Styrol-Butadiengummi (SBRl-Gummi mit einer shore-A-Härte von 90 (s. DIN 16 909)) auf einer Fläche von 30 x 130 $mm^2$ aufgestrichen und 45 min bei Raumtemperatur getrocknet. Nach einmaliger Aufheizung der Klebstoffilme durch IR-Strahlung auf 80°C im Verlauf von ca. 5 sek (Blitzaktivierung) wurden die Proben 10 sek mit 0,5 $N/mm^2$ verpreßt. Die Schälfestigkeit wurde sofort (Sofortfestigkeit) und nach 5 Tagen Lagerung im Klimaraum (23°C / 50 % rel.) (Endfestigkeit) nach DIN 52 273 gemessen.

Wärmestandfestigkeit:

Die Prüfkörper wurden wie zur Schälfestigkeitsprüfung hergestellt. Nach Temperung von 1 h bei 50°C wurden sie bei 50°C jeweils 10 min mit 5, 10, 15, 20, 25 und 30 N in aufsteigender Reihenfolge belastet. Hielt die Verklebung, so wurde die Probe entlastet, 30 min auf 60°C aufgeheizt und wieder bis max. 30 N in 10 Minutenschritten geprüft. In gleicher Weise wurde die Prüfung nach jedem Durchlauf um 10°C erhöht. Angegeben sind jeweils die Temperatur (°C) und die Belastung (N), bei der eine Öffnung der Verklebung von mehr als 50 mm erkennbar war.

Tabelle II zeigt die als Funktion der verwendeten Polyurethandispersion erhaltenen Ergebnisse.

Tabelle II

| | Sofortfestigkeit (N($mm^2$) | Endfestigkeit [$N/mm^2$] | Wärmestandfestigkeit (°C/N) |
|---|---|---|---|
| KPUD1 | 1,1 | 5,5 | 80/25 |
| EPUD4 | 1,0 | 6,0 | 80/25 |
| KPUD2 | 1,1 | 3,6 | 70/20 |
| EPUD3 | 1,2 | 3,1 | 70/25 |

**Patentansprüche**

**1.** Wäßrige Polyurethandispersion, enthaltend

A) wenigstens ein im wäßrigen Medium dispergiertes, bei einem pH-Wert des wäßrigen Dispergiermediums von ≥ 6 negativ geladene Gruppen aufweisendes, Polyurethan (Komponente A) als Hauptbestandteil und

B) bezogen auf die Komponente A wirksame Mengen wenigstens eines Polymerisats (Komponente B), das in polymerisierter Form aufgebaut ist aus

a) 25 bis 100 Gew.-% wenigstens eines ungesättigten Monomeren, das, im Sinne Brönsteds, wenigstens eine Säuregruppe aufweist (Monomere Ba) und

b) 0 bis 75 Gew.-% eines oder mehrerer radikalisch copolymerisierbarer Monomere (Monomere Bb),

mit der Maßgabe, daß

- die Komponente B ein relatives zahlenmittleres Molekulargewicht von 1 000 bis 50 000 aufweist,
- die Komponente B bei Zusatz zu Wasser bei 25°C wie eine Brönsted-Säure wirkt und
- das wäßrige Dispergiermedium, enthaltend die Komponenten (A) und (B), bei 25°C einen pH-Wert ≥ 6 aufweist.

**2.** Wäßrige Polyurethandispersion nach Anspruch 1, deren Gehalt an A, bezogen auf die Dispersion, 20 bis 80 Gew.-

% beträgt.

3. Wäßrige Polyurethandispersion nach den Ansprüchen 1 oder 2, deren wäßriges Dispergiermedium bei 25°C einen pH-Wert von 6 bis 11 aufweist.

4. Wäßrige Polyurethandispersion nach Anspruch 1 bis 3, deren Komponente A im wesentlichen aufgebaut ist aus

   a) wenigstens einem organischen Diisocyanat oder wenigstens einem eine arithmetisch mittlere NCO-Funktionalität von 1,9 bis 2,3 aufweisenden Gemisch aus organischen Isocyanaten [Monomere Aa],

   b) wenigstens einer wenigstens eine anionogene Gruppe aufweisenden Verbindung, die darüber hinaus wenigstens eine alkoholische OH-Gruppe oder thiolische SH-Gruppe oder

   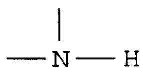 -Gruppe

   oder ein Gemisch dieser Gruppen aufweist, wobei die 3 letztgenannten Gruppen vom Begriff der anionogenen Gruppen ausgenommen sind [Monomere Ab],

   c) wenigstens einem von den Monomeren Ab verschiedenen zweiwertigen Alkohol eines zahlenmittleren relativen Molekulargewichts von über 500 bis 5000 oder wenigstens einem eine arithmetisch mittlere Funktionalität an alkoholischen OH-Gruppen von 1,5 bis 2,5 aufweisenden Gemisch aus von den Monomeren Ab verschiedenen Alkoholen eines zahlenmittleren relativen Molekulargewichts von über 500 bis 5000 [Oligomere Ac] und

   d) keiner, einer oder mehreren von den Monomeren Ab verschiedenen Verbindungen, die zwei funktionelle Gruppen aus der Menge umfassend die alkoholische OH-Gruppe, die thiolische SH-Gruppe und die

   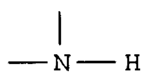 -Gruppe

   sowie ein zahlenmittleres relatives Molekulargewicht von 60 bis 500 aufweisen oder keinem oder einem eine arithmetisch mittlere Funktionalität an funktionellen Gruppen aus der Menge umfassend die alkoholische OH-Gruppe, die thiolische SH-Gruppe und die

   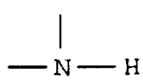 -Gruppe

   von 1,5 bis 2,5 aufweisenden Gemisch aus von den Monomeren Ab verschiedenen Verbindungen eines zahlenmittleren Molekulargewichts von 60 bis 500 [Monomere Ad].

5. Wäßrige Polyurethandispersion nach Anspruch 1 bis 4, deren Komponente B 50 bis 100 Gew.-% an Monomeren Ba einpolymerisiert enthält.

6. Wäßrige Polyurethandispersion nach Anspruch 1 bis 5, deren Komponente B in polymerisierter Form enthält:

   a) 50 bis 100 Gew.-% Acrylsäure, Methacrylsäure und/oder Maleinsäureanhydrid und

   b) 0 bis 50 Gew.-% Styrol.

7. Wäßrige Polyurethandispersion nach Anspruch 1 bis 6, enthaltend, bezogen auf die Komponente A, 0,01 bis 5 Gew.-% der Komponente B.

8. Wäßrige Polyurethandispersion nach Anspruch 1 bis 7, enthaltend als weitere Komponente C ein die Haftung verbesserndes Polymerisat.

9. Verwendung von Polymerisaten B, die in polymerisierter Form aus

a) 25 bis 100 Gew.-% wenigstens eines ungesättigten Monomeren, das, im Sinne Brönsteds, wenigstens eine Säuregruppe aufweist und

b) 0 bis 75 Gew.-% eines oder mehrerer radikalisch copolymerisierbarer Monomere (Monomere Bb)

mit der Maßgabe aufgebaut sind, daß

- das Polymerisat B ein relatives zahlenmittleres Molekulargewicht von 1 000 bis 50 000 aufweist und
- die Komponente B bei Zusatz zu Wasser bei 25°C wie eine Brönsted-Säure wirkt,

als den Fließwiderstand minderndes Additiv in wäßrigen Polyurethandispersionen, die wenigstens ein im wäßrigen Medium dispergiertes, bei einem pH-Wert des wäßrigen Dispergiermediums von ≥ 6 negativ geladene Gruppen aufweisendes, Polyurethan A als Hauptbestandteil enthalten, mit der Maßgabe, daß der pH-Wert des wäßrigen Dispergiermediums der resultierenden Mischung bei 25°C auf einen Wert ≥ 6 eingestellt wird.

10. Verfahren zur Herstellung von wäßrigen Polyurethandispersionen gemäß den Ansprüchen 1 bis 8, dadurch gekennzeichnet, daß man zunächst eine das Polyurethan A enthaltende wäßrige Polyurethandispersion herstellt und dieser anschließend das Polymerisat B sowie gegebenenfalls wirksame Mengen einer Base zusetzt.

11. Verwendung von wäßrigen Polyurethandispersionen gemäß den Ansprüchen 1 bis 8 als Lacke, als Massen zum Beschichten, als Bindemittel oder als Klebstoffe.

**Claims**

1. An aqueous polyurethane dispersion containing

A) at least one polyurethane (component A) dispersed in an aqueous medium and having negatively charged groups at a pH of the aqueous dispersing medium of ≥ 6, as the main component, and
B) effective amounts, based on component A, of at least one polymer (component B) which comprises, in polymerized form,

a) from 25 to 100% by weight of at least one unsaturated monomer which has at least one acid group of the Brönsted type (monomers Ba) and
b) from 0 to 75% by weight of one or more monomers capable of undergoing free radical copolymerization (monomers Bb),

with the proviso that

component B has a relative number average molecular weight of from 1,000 to 50,000,
component B acts as a Brönsted acid when added to water at 25°C and
the aqueous dispersing medium, containing components (A) and (B), has a pH of ≥ 6 at 25°C.

2. An aqueous polyurethane dispersion as claimed in claim 1, whose content of A is from 20 to 80% by weight, based on the dispersion.

3. An aqueous polyurethane dispersion as claimed in claim 1 or 2, whose aqueous dispersing medium has a pH of from 6 to 11 at 25°C.

4. An aqueous polyurethane dispersion as claimed in any of claims 1 to 3, whose component A essentially comprises

a) at least one organic diisocyanate or at least one mixture of organic isocyanates which has an arithmetic mean NCO functionality of from 1.9 to 2.3 [monomers Aa],
b) at least one compound which has at least one anionic group and furthermore possesses at least one alcoholic OH group or thiolic SH group or

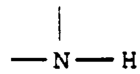

group or a mixture of these groups, the last 3 groups mentioned being excluded from the term anionic groups [monomers Ab],
c) at least one dihydric alcohol which differs from the monomers Ab and has a number average relative molecular weight of from more than 500 to 5,000 or at least one mixture of alcohols differing from the monomers Ab, which mixture has an arithmetic mean functionality of from 1.5 to 2.5, based on alcoholic OH groups, and possesses a number average relative molecular weight of from more than 500 to 5,000 [oligomers Ac] and, if desired,
d) one or more of the compounds which differ from the monomers Ab and have two functional groups from the amount comprising the alcoholic OH group, the thiolic SH group and the

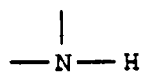

group and possess a number average relative molecular weight of from 60 to 500, or, if desired, a mixture of compounds differing from the monomers Ab, which mixture has an arithmetic mean functionality of from 1.5 to 2.5, based on functional groups from the amount comprising the alcoholic OH group, the thiolic SH group and the

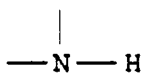

group, and possesses a number average molecular weight of from 60 to 500 [monomers Ad].

**5.** An aqueous polyurethane dispersion as claimed in any of claims 1 to 4, whose component B contains from 50 to 100% by weight of monomers Ba as polymerized units.

**6.** An aqueous polyurethane dispersion as claimed in any of claims 1 to 5, whose component B contains, in polymerized form,

a) from 50 to 100% by weight of acrylic acid, methacrylic acid or maleic anhydride and
b) from 0 to 50% by weight of styrene.

**7.** An aqueous polyurethane dispersion as claimed in any of claims 1 to 6, containing from 0.01 to 5% by weight, based on component A, of component B.

**8.** An aqueous polyurethane dispersion as claimed in any of claims 1 to 7, containing, as further component C, an adhesion-improving polymer.

**9.** Use of a polymer B which comprises, in polymerized form,

a) from 25 to 100% by weight of at least one unsaturated monomer which has at least one acid group of the Brönsted type and
b) from 0 to 75% by weight of one or more monomers capable of undergoing free radical copolymerization (monomers Bb),

with the proviso that

polymer B has a relative number average molecular weight of from 1,000 to 50,000 and
component B acts as a Brönsted acid when added to water at 25°C,

as a flow resistance-reducing additive in aqueous polyurethane dispersions which contain, as the main component, at least one polyurethane A which is dispersed in an aqueous medium and has negatively charged groups at a pH of the aqueous dispersing medium of ≥ 6, with the proviso that the pH of the aqueous dispersing medium of the resulting mixture at 25°C is brought to ≥ 6.

**10.** A process for the preparation of an aqueous polyurethane dispersion as claimed in any of claims 1 to 8, wherein an aqueous polyurethane dispersion containing the polyurethane A is first prepared and the polymer B and, if required, effective amounts of a base are then added to said polyurethane dispersion.

**11.** Use of an aqueous polyurethane dispersion as claimed in any of claims 1 to 8 as a finish, a coating material, a binder or an adhesive.

## Revendications

**1.** Dispersion aqueuse de polyuréthanne, qui contient

A) au moins un polyuréthanne dispersé dans le milieu aqueux, présentant des radicaux négativement chargés à une valeur de pH du milieu de dispersion aqueux ≥ 6 (composant A), à titre de constituant principal et
B) par rapport au composant A, des quantités actives d'au moins un polymère (composant B), qui, sous forme polymérisée, est constitué de

a) 25 à 100% en poids d'au moins un monomère insaturé, qui, au sens de Brönsted, présente au moins un radical acide (monomère Ba) et
b) 0 à 75% en poids d'un ou plusieurs monomères copolymérisables par voie radicalaire (monomère Bb),

avec la condition que

- le composant B présente un poids moléculaire moyen en nombre relatif de 1 000 à 50 000,
- le composant B agisse comme un acide de Brönsted par addition à de l'eau à 25°C et
- le milieu de dispersion aqueux contenant les composants (A) et (B), présente une valeur de pH ≥ 6 à 25°C.

**2.** Dispersion aqueuse de polyuréthanne suivant la revendication 1, dont la teneur en A, par rapport à la dispersion, varie de 20 à 80% en poids.

**3.** Dispersion aqueuse de polyuréthanne suivant la revendication 1 ou 2, dont le milieu de dispersion aqueux présente une valeur de pH de 6 à 11, à 25°C.

**4.** Dispersion aqueuse de polyuréthanne suivant l'une quelconque des revendications 1 à 3, dont le composant A est essentiellement constitué de

a) au moins un diisocyanate organique ou au moins un mélange d'isocyanates organiques présentant une fonctionnalité en NCO moyenne arithmétique de 1,9 à 2,3 (monomère Aa),
b) au moins un composé présentant au moins un radical anionogéne, qui présente en outre au moins un radical OH-alcoolique, ou radical SH-thiolique ou radical

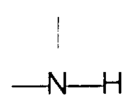

ou un mélange de ces groupes, où les trois groupes mentionnés en dernier lieu sont exclus du concept des radicaux anionogènes (monomère Ab),
c) au moins un alcool différent des monomères Ab d'un poids moléculaire relatif moyen en nombre de plus de 500 à 5000, ou au moins un mélange d'alcools qui diffèrent des monomères Ab, présentant une fonctionnalité moyenne arithmétique de radicaux OH-alcooliques de 1,5 à 2,5, d'un poids moléculaire relatif moyen en nombre de plus de 500 à 5000 (oligomère Ac) et
d) aucun, un ou plusieurs composés qui diffèrent des monomères Ab, qui présentent deux radicaux fonctionnels choisis dans la catégorie englobant le radical OH-alcoolique, le radical SH-thiolique et le radical

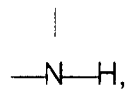

qui possèdent un poids moléculaire relatif moyen en nombre de 60 à 500, ou aucun ou un mélange de composés qui diffèrent des monomères Ab présentant une fonctionnalité moyenne arithmétique de radicaux fonctionnels choisis dans la catégorie englobant le radical OH-alcoolique, le radical SH-thiolique et le radical

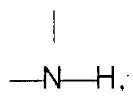

de 1,5 à 2,5, d'un poids moléculaire moyen en nombre de 60 à 500 (monomère Ad).

**5.** Dispersion de polyuréthanne suivant l'une quelconque des revendications 1 à 4, dont le composant B contient 50 à 100% en poids de monomères Ba incorporés par polymérisation.

**6.** Dispersion aqueuse de polymère suivant l'une quelconque des revendications 1 à 5, dont le composant B contient, sous forme polymérisée,

a) 50 à 100% en poids d'acide acrylique, d'acide méthacrylique et/ou d'anhydride de l'acide maléique et
b) 0 à 50% en poids de styrène,

**7.** Dispersion aqueuse de polyuréthanne suivant l'une quelconque des revendications 1 à 6, qui contient, par rapport au composant A, 0,01 à 5% du composant B.

**8.** Dispersion aqueuse de polyuréthanne suivant l'une quelconque des revendications 1 à 7, qui contient, à titre de composant C supplémentaire, un polymère améliorant l'adhésivité.

**9.** Utilisation de polymères B, qui sont constitués, sous forme polymérisée, de

a) 25 à 100% en poids d'au moins un monomère insaturé, qui, au sens de Brönsted, présente au moins un groupe acide et
b) 0 à 75% en poids d'un ou plusieurs monomères copolymérisables par voie radicalaire (monomère Bb),

avec la condition que

- le polymère B présente un poids moléculaire moyen en nombre relatif de 1 000 à 50 000 et
- le composant B agisse comme un acide de Brönsted, par addition d'eau à 25°C,

à titre d'additif diminuant la résistance à l'écoulement dans des dispersions aqueuses de polyuréthanne qui contiennent au moins un polyuréthanne A dispersé dans le milieu aqueux, présentant des radicaux négativement chargés à une valeur de pH du milieu de dispersion aqueux $\geq 6$, à titre de constituant principal, avec la condition que la valeur du pH du milieu de dispersion aqueux du mélange qui en résulte soit réglé à la valeur $\geq 6$, à 25°C.

**10.** Procédé de préparation de dispersions aqueuses de polyuréthannes suivant l'une quelconque des revendications 1 à 8, caractérisé en ce que l'on prépare d'abord une dispersion aqueuse de polyuréthanne contenant le polyuréthanne A et on ajoute ensuite le polymère B, ainsi qu'éventuellement des proportions actives d'une base.

**11.** Utilisation de dispersions aqueuses de polyuréthannes suivant l'une quelconque des revendications 1 à 8, à titre de laques, de masses de revêtement, de liants ou de colles.